# EUROPEAN PATENT APPLICATION

(11) **EP 3 819 196 A1**
(43) Date of publication of application: **12.05.2021**
(21) Application number: 19207645.3
(22) Date of filing: 07.11.2019
(51) Int. Cl.: B62D 33/06

(54) **OPERATOR CABIN FOR TELEHANDLER**

(71) Applicant: Kramer-Werke GmbH, 88630 Pfullendorf (DE)
(72) Inventor: Surgenor, Gareth, Sileby, Leicestershire LE 12 7SH (GB)
(74) Representative: Müller Hoffmann & Partner

(57) **Abstract**

An operator cabin (1) for a telehandler is provided, with a cabin basis (2) having a front end and a rearward end; a cabin roof (3) extending above the cabin basis (2); at least one A pillar (4) extending between the cabin basis (2) and the cabin roof (3) for supporting the cabin roof (3) on the cabin basis (2); at least one B pillar (5) extending between the cabin basis (2) and the cabin roof (3) for supporting the cabin roof (3) on the cabin basis (2); a front window being held by a front window frame (6); a rearward window (11) being arranged opposite to the front window and being held by a rearward window frame (7); wherein the A pillar (4) is a part of a holding structure for the front window frame (6); the B pillar (5) is a part of a holding structure for the rearward window frame (7); and wherein no further pillars than A pillars (4) or B pillars (5) are provided for supporting the cabin roof (3) on the cabin basis (2). In particular, the operator cabin (1) does not have C pillars for holding the rearward window frame (7).

## Description

The invention relates to a so-called telehandler, in particular to an operator cabin for such a telehandler.

Telehandlers are also called as telescopic handler, teleporter, reach forklift or boom lift. It is a machine widely used in agriculture and industry. It is provided with a single telescopic or articulating boom that can extend forwards and upwards from the vehicle. On the end of the boom (telescopic arm) the operator can fit one of several attachments, such as a bucket, pellet forks, a muck grab, a shovel etc..

Telehandlers can be used to move loads to and from places unreachable for a conventional forklift or loader. A telehandler usually has a chassis which is supported by at least two-wheel axles. For increasing the comfort of an operator, an operator cabin is supported by the chassis. Moreover, a telescopic arm system can be supported by the chassis wherein the telescopic arm is connected with the chassis by a swivel axis. It can be moved around the swivel axis by means of a drive system. Moreover, the drive system can also be adapted to extend the telescopic arm, if necessary. Furthermore, a drive system for driving the wheels of the telehandler can be supported by the chassis.

For the operator, it is essential to have a good visibility around the telehandler because it can be driven forwards and rearwards on the one hand and because of the movement of the telescopic arm (usually with heavy loads) on the other hand.

Operator cabins are known which contain a combination of B and C pillars to support the ROPS (Roll Over Protection System) and FOPS (Fall Over Protection System) loadings. However, every pillar leaves a masked area on the 360° visibility circle.

All operator cabins known meet the required standards, but there are still safety issues during the use of telehandlers, where property or bi-standers are struck by moving machines, as the design of the cabin restricts some visibility to the rear of the machine.

Therefore, it is an object of the invention to provide an operator cabin with improved visibility and to provide a telehandler which is equipped by this operator cabin.

The object is achieved with the subject-matters of the independent claims. The dependent claims relate to further embodiments.

An operator cabin for a telehandler is provided, with a cabin basis having a front end and a rearwards end; a cabin roof extending above the cabin basis; at least one A pillar extending between the cabin basis and the cabin roof for supporting the cabin roof on the cabin basis; at least one B pillar extending between the cabin basis and the cabin roof for supporting the cabin roof on the cabin basis; a front window being held by a front window frame; a rearwards window being arranged opposite to the front window and being held by a rearward window frame; wherein the A pillar is a part of a holding structure for the front window frame; the B pillar is a part of a holding structure for the rearwards window frame; and wherein no further pillars than A pillars or B pillars are provided for supporting the cabin roof on the cabin basis.

This means that the telehandler cabin does not have pillars behind (usually known as C pillars), but only B pillars, to give a virtually unobstructed view to the whole rear of the machine.

Here, the front window is the window directed in the main driving direction. When driving in forward direction, the operator views through the front window.

The A pillar can in particular be a holding structure for a vertical part of the front window frame, whereas the B pillar can be a holding structure for a vertical part of the rearward window frame.

In an embodiment, at least one A pillar and/or at least one B pillar is made of metal, in particular made of steel.

In an embodiment, two A pillars are provided, each extending mainly in a vertical direction, one of the A pillars being a holding structure for a left vertical part of the front window frame, the other of the A pillars being a holding structure for a right vertical part of the front window frame, wherein two B pillars may be provided, each extending mainly in a vertical direction, one of the B pillars being a holding structure for a left vertical part of the rearward window frame, the other of the B pillars being a holding structure for a right vertical part of the rearward window frame. The definitions of "left" and "right" have to be seen in the main direction (main driving direction).

The rearward window may have a curved structure and may be curved around at least one substantially vertical axis. Curved means that the window has an angle between 60° and 90°. The angle is preferrably an acute angle. In an embodiment, the window is constituted from at least 2 parts of glas.

The rearward window may have a dimension such that it has a depth D extending in a main direction and a width W extending in a direction perpendicular to the main direction, wherein the depth D of the rearward window may be at least 40% of its width W. Preferably, the depth can be in the range of 40% to 100% of the width. Even more preferably, the depth can be in the range of 40% to 60% of the width.

The rearward window frame may comprise a lower support for holding the lower side of the rearward window, an upper support for holding the top side of the rearward window, wherein at least one vertical support for holding a vertical side of the rearward window, the vertical support being held by one of the B pillars.

The lower support and the upper support of the rearward window frame may extend along a curve.

The cabin roof may extend at least from the top side of the front window frame to the top side of the rearward window frame.

A door frame may be provided for holding a driver's door, the door frame being arranged at a side of the cabin basis, wherein one of the A pillars may be forming a holding structure for the front side of the door frame, and wherein one of the B pillars may be forming a holding structure of the rear side of the door frame.

A side window frame may be provided opposite to the door frame on the other side of the cabin basis, wherein one of the A pillars may be forming a holding structure for the front side of the side window frame, and wherein one of the B pillars may be forming a holding structure of the rear side of the side window frame.

In an embodiment, a driver seat may be arranged in the interior of the cabin, wherein two B pillars are provided. An angle between two virtual horizontal lines may be greater than 90°, wherein each virtual horizontal line may be defined between a virtual point vertically above the seat and a respective one of the two B pillars. The angle may be not only greater than 90°, but greater than 120°. In a preferred embodiment, it may be in a range between 120° and 135°.

This means that the operator (or driver) of the telehandler sitting in the operator cabin on the driver seat can have a free view of more than 90°, in particular more than 120° (angle of view).

The virtual point vertically above the seat can be defined in particular vertically above the middle of the seat. Thus, the virtual point should be very close to the head of an operator, in particular very close to the eyes of the operator. Thus, by this definition, the visibility through the rearward window can be estimated.

According to the invention, a telehandler is provided, with an operator cabin as explained above; a chassis for supporting the operator cabin, the chassis being supported by at least two wheel axles; a telescopic arm system supported by the chassis; a first drive system for driving wheels of the wheel axles; and with a second drive system for moving the telescopic arm.

The first drive system and the second drive system can be connected. In particular, both drive systems can be driven by the same motor. In this case, the first drive system and the second drive system are provided for transmitting the driving energy from the motor to the respective components for causing the requested movements.

The telescopic arm may be connected with the chassis by a swivel axis and may be adapted to be moved around the swivel axis by means of the second drive system. The swivel axis may be arranged in a rearward section of the chassis. The telescopic arm may extend from the swivel axis in the main direction along the operator cabin beyond a front section of the chassis.

The invention and further features and advantages are explained by way of example together with the accompanying drawings.
- **Fig.** 1: shows the structural elements of an operator cabin for a telehandler in a perspective view.
- **Fig.** 2: shows the operator cabin of Fig. 1 from another perspective view.
- **Fig.** 3: shows the operator cabin from a left side view.
- **Fig.** 4: shows a cut view from the top side of the operator cabin.
- **Fig.** 5: shows a sideview of an example for a telehandler.

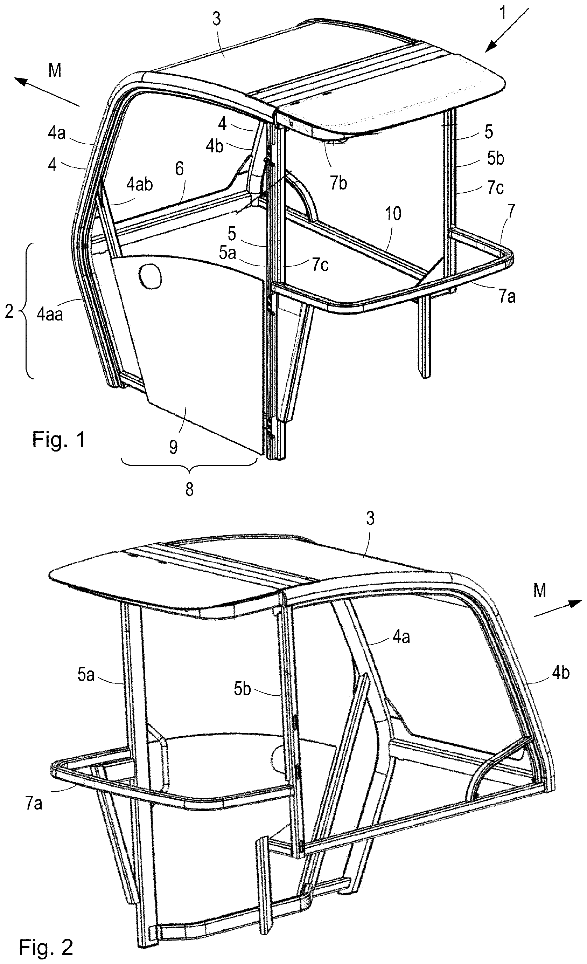

Fig. 1 shows the structural elements of an operator cabin 1 for a telehandler (not shown), with a cabin basis 2 and a cabin roof 3. Fig. 2 shows the same operator cabin 1, but from a different perspective view.

Two A pillars 4 are provided, extending between the cabin basis 2 and the cabin roof for supporting the cabin roof 3 on the cabin basis 2 in a front section. The two A pillars 4 are also referenced in the following as left A pillar 4a and right A pillar 4b with reference to a main direction M which is also the main driving direction of the telehandler.

Further, two B pillars 5 are extending between the cabin basis 2 and the cabin roof 3 for supporting the cabin roof 3 on the cabin basis 2 in a middle section. They are also named as left B pillar 5a and right B pillar 5b.

The cabin has 4 pillars in total. There are two pillars on the door side of the cabin.

The A pillars 4 are part of a holding structure for a front window frame 6 in which a front window (not shown) can be inserted. The front window with the front window frame 6 is directed to the main direction M.

In the same way, B pillars 5 are part of a holding structure for a rearward window frame 7, in which a rearward window (not shown) can be inserted.

Moreover, a door frame 8 is provided by the two left pillars, left A pillar 4a and left B pillar 5a, in which a driver's door 9 can be inserted or which is suitable for holding the driver's door 8 so that the door can be opened and closed.

Opposite to the door frame 8 and, thus, opposite to the driver's door 9, a side window frame 10 is provided on the other side (right side) of the cabin basis 2.

The right pillars, i.e. the right A pillar 4b and the right B pillar 5b are forming a holding structure for the side window frame 10. The side window itself is not visible in Fig. 1.

The cabin basis 2 is considered to be the lower part of the operator cabin 1. In particular, it is considered to be the part of the operator cabin 1 below the several windows or window frames 6, 7, 10.

As can be seen in Figs. 1 and 2, the left B pillar 5a extends from the cabin roof 3 to the bottom. The upper part of left B pillar 5a serves as a part of a holding structure for the rearward window frame 7. The lower part of the left B pillar 5a serves as a part of a holding structure of the rear side of the door frame 8.

Moreover, it can be seen that at least the left A pillar 4a can be divided into two parts. A main part of the left A pillar 4a extends into the cabin basis 2 and is characterized by reference signs 4aa, whereas the other part extends in an angle. This other part is characterized by reference sign 4ab. Either part 4aa or part 4ab of A pillar 4a can form a part of a holding structure for the front side of the door frame 8.

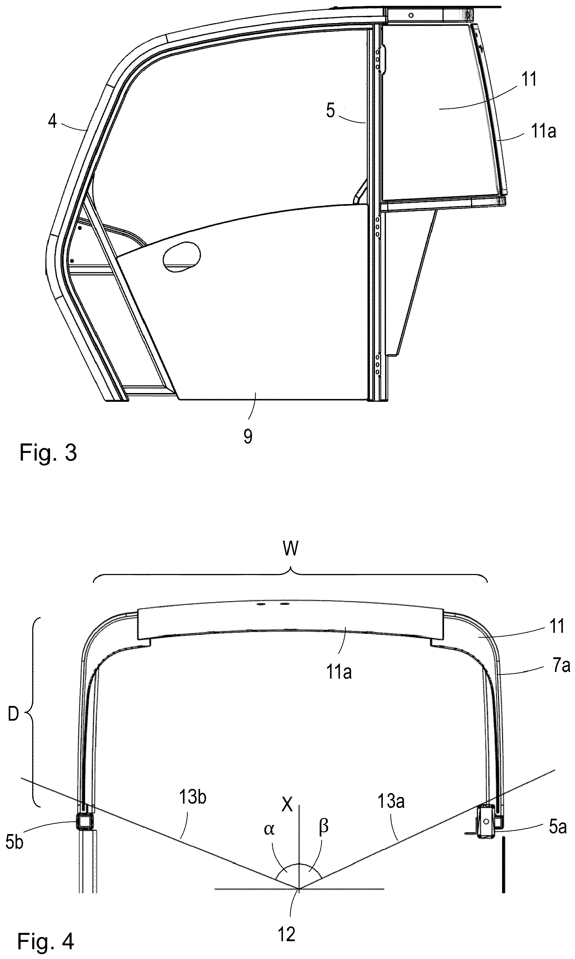

Fig. 3 shows the operator cabin of Figs. 1 and 2 from a left side view.

Here, a rearward window 11 is inserted into the rearward window frame 7. This rearward window 11 is not visible in Figs. 1 and 2. The rearward window frame 7 in particular comprises a lower support 7a and an upper support 7b. Moreover, two vertical supports 7c are provided for holding a vertical side of the rearward window 11. These vertical supports 7c are integrated with the two B pillars 5a, 5b, as shown in Fig. 1. The lower support 7a and the upper support 7b are attached to the two B pillars 5a, 5b.

The lower support 7a for holding the lower side of the rearward window 11 extends over a strongly curved course. Seen from above, this extension can be understood as an "U" with a broadened basis.

The contour of this "U" can also be seen in Fig. 4 which shows a cut view from the top side of the operator cabin.

The rearward window 11 thus has a strongly convex structure.

The operator cabin 1 with the cabin basis 2, the cabin roof 3, the A pillars 4 and the B pillars 5 and the rearward window frame 7 are forming a cage-like structure with high stability for fulfilling all ROPS- and FOPS-requirements.

Fig. 4 further shows that the rearward window 11 may have a further separate window element 11a which is movable in a vertical direction relative to the remaining rearward window 11 which is held by the rearward window frame 7. By opening the window element 11a, the driver can regulate the supply of fresh air into the cabin.

Fig. 4 further shows that the driver may have a substantial free angle of view which is not impaired by obstacles. The driver's head or the driver's eyes are virtually supposed to be at a virtual point 12 which is vertically above a driver's seat (not shown). From this virtual point 12, two virtual horizontal lines 13a and 13b are drawn in Fig. 4 which connect the virtual point 12 with an edge of the vertically extending B pillars 5a, 5b. Angles α and β between the respective horizontal lines 13a, 13b relative to the main axis X can be e.g. in the range of 50 to 70°. In a preferred embodiment, the range of the angles is within 60 to 68°. This leads to a free angle of view in the range of 120 to about 135°.

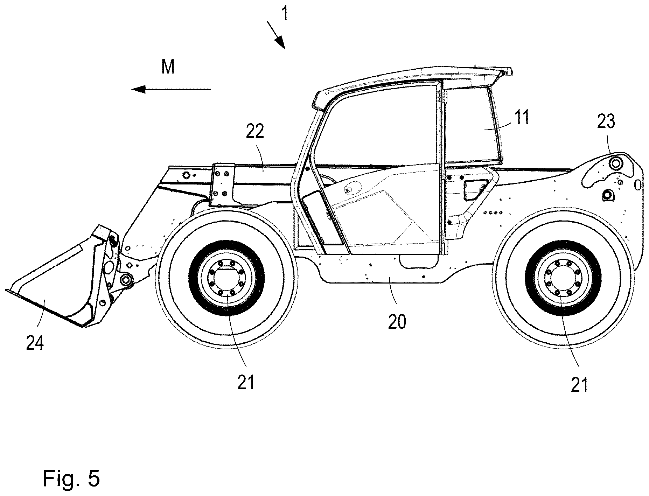

Fig. 5 shows a telehandler which is equipped with an operator cabin 1 according to the present invention.

The telehandler is furthermore provided with a chassis 20 for supporting the operator cabin 1. The chassis 20 itself is supported by two wheel axles 21. In the view direction of Fig. 5 behind the operator cabin 1, a telescopic arm 22 is arranged which extends from a swivel axis 23 in the main direction M along the operator cabin 1 beyond a front section of the chassis 20. The telescopic arm 22 is adapted to hold several tools. In the present case, a shovel 24 is held by a telescopic arm 22.

It can be seen in Fig. 5 that the rearward window 11 has a convex or dome-like structure which allows the driver to have excellent visibility to the rearward window 11. Since the operator cabin 1 is provided without C pillars (which are usually arranged in the back of the operator cabin i.a. to hold the rearward window) there are not maskings on the visibility circle. The cabin 1 itself and the machine frame (chassis 20) are designed to meet the structural standards. Therefore, no structural support is necessary which could restrict the operator's vision backwards.

## Claims

1. Operator cabin (1) for a telehandler, with
- a cabin basis (2) having a front end and a rearward end;
- a cabin roof (3) extending above the cabin basis (2);
- at least one A pillar (4) extending between the cabin basis (2) and the cabin roof (3) for supporting the cabin roof (3) on the cabin basis (2);
- at least one B pillar (5) extending between the cabin basis (2) and the cabin roof (3) for supporting the cabin roof (3) on the cabin basis (2);
- a front window being held by a front window frame (6);
- a rearward window (11) being arranged opposite to the front window and being held by a rearward window frame (7);
wherein
- the A pillar (4) is a part of a holding structure for the front window frame (6);
- the B pillar (5) is a part of a holding structure for the rearward window frame (7); and wherein
- no further pillars than A pillars (4) or B pillars (5) are provided for supporting the cabin roof (3) on the cabin basis (2).

2. Operator cabin (1) according to claim 1, wherein at least one A pillar (4) and/or at least one B pillar (5) is made of metal.

3. Operator cabin (1) according to one of the preceding claims, wherein
- two A pillars (4a, 4b) are provided, each extending mainly in a vertical direction, one of the A pillars (4a) being a holding structure for a left vertical part of the front window frame (6), the other of the A pillars (4b) being a holding structure for a right vertical part of the front window frame (6); and wherein
- two B pillars (5a, 5b) are provided, each extending mainly in a vertical direction, one of the B pillars (5a) being a holding structure for a left vertical part of the rearward window frame (7), the other of the B pillars (5b) being a holding structure for a right vertical part of the rearward window frame (7).

4. Operator cabin (1) according to one of the preceding claims, wherein
- the rearward window (11) has a curved structure and is curved around at least one substantially vertical axis;
- the rearward window (11) has a dimension such that it has a depth (D) extending in a main direction (M) and a width (W) extending in a direction perpendicular to the main direction (M); and wherein
- the depth (D) of the rearward window (11) is at least 40% of its width (W).

5. Operator cabin (1) according to one of the preceding claims, wherein the rearward window frame (7) comprises
- a lower support (7a) for holding the lower side of the rearward window (11);
- an upper support (7b) for holding the upper side of the rearward window (11); and wherein
- at least one vertical support (7c) for holding a vertical side of the rearward window (11), the vertical support (7c) being held by one of the B pillars (5a, 5b).

6. Operator cabin (1) according to one of the preceding claims, wherein the lower support (7a) and the upper support (7b) extend along a curve.

7. Operator cabin (1) according to one of the preceding claims, wherein the cabin roof (3) is extending at least from the top side of the front window frame (6) to the top side of the rearward window frame (7).

8. Operator cabin (1) according to one of the preceding claims, wherein
- a door frame (8) is provided for holding a driver's door (9), the door frame (8) being arranged at a side of the cabin basis (2);
- one of the A pillars (4a) is forming a part of a holding structure for the front side of the door frame (8); and wherein
- one of the B pillars (5a) is forming a part of a holding structure of the rear side of the door frame (8).

9. Operator cabin (1) according to one of the preceding claims, wherein
- a side window frame (10) is provided opposite to the door frame (8) on the other side of the cabin basis (2);
- one of the A pillars (4b) is forming a holding structure for the front side of the side window frame (10); and wherein
- one of the B pillars (5b) is forming a holding structure of the rear side of the side window frame (10).

10. Operator cabin (1) according to one of the preceding claims, wherein
- a driver seat is arranged in the interior of the cabin;
- two B pillars (5a, 5b) are provided; and wherein
- an angle between two virtual horizontal lines (13a, 13b) is greater than 90 degrees, wherein each virtual horizontal line (13a, 13b) is defined between a virtual point (12) vertically above the driver seat and a respective one of the two B pillars (5a, 5b).

11. Telehandler, with
- an operator cabin (1) according to one of the preceding claims;
- a chassis (20) for supporting the operator cabin (2), the chassis (20) being supported by at least two wheel axles (21);
- a telescopic arm (22) system supported by the chassis (20);
- a first drive system for driving wheels of the wheel axles (21); and with
- a second drive system for moving the telescopic arm (22).

12. Telehandler according to claim 11, wherein
- the telescopic arm (22) is connected with the chassis (20) by a swivel axis (23) and is adapted to be moved around the swivel axis (23) by means of the second drive system;
- the swivel axis (23) is arranged in a rearward section of the chassis (20); and wherein
- the telescopic arm (22) extends from the swivel axis (23) in the main direction (M) along the operator cabin (1) beyond a front section of the chassis (20).
